# FASCICULE DE BREVET EUROPEEN

(11) **EP 4 024 819 B1**
(45) Date de publication et mention de la délivrance du brevet: **21.05.2025**
(21) Numéro de dépôt: 21218064.0
(22) Date de dépôt: 29.12.2021
(51) Int. Cl.: H04L 41/0631, H04L 41/0893, H04L 43/0811, H04L 41/16

(54) **PROCÉDÉ DE DÉTECTION, PRODUIT PROGRAMME D'ORDINATEUR ET SYSTÈME DE DÉTECTION ASSOCIÉS**
DETEKTIONSVERFAHREN, ENTSPRECHENDES COMPUTERPROGRAMMPRODUKT UND DETEKTIONSSYSTEM
DETECTION METHOD, ASSOCIATED COMPUTER PROGRAM PRODUCT AND DETECTION SYSTEM

(30) Priorité: 30.12.2020 FR 2014242
(43) Date de publication de la demande: 06.07.2022
(73) Titulaire: THALES, 92400 Courbevoie (FR)
(72) Inventeur: RANNOU, Léo, 91767 PALAISEAU CEDEX (FR); GRAH, Simon, 91767 PALAISEAU (FR); SAUSSET, François, 91767 PALAISEAU CEDEX (FR)
(74) Mandataire: Lavoix

(56) Documents cités:
- US-A1- 2004 199 576
- US-A1- 2015 033 084

## Description

La présente invention concerne un procédé de détection d'au moins un groupe de nœuds anormaux parmi une pluralité de nœuds d'un réseau de communication. L'invention concerne aussi un produit programme d'ordinateur associé.

L'invention concerne également un ensemble comprenant un réseau de communication, comprenant une pluralité de nœuds étant reliés entre eux par des liens de communication et un système de détection.

L'invention concerne le domaine de gestion et surveillance de réseaux de communication, tels que des réseaux informatiques. De tels réseaux de communication comprennent une pluralité de nœuds reliés entre eux par des liens de communication. Les nœuds sont configurés pour mettre en œuvre des connexions par les liens de communication.

Le document US 2015/033084 A1 décrit l'agencement d'indicateurs de performance d'un réseau en données historiques de dépendance d'anomalies.

Le document US 2004/199576 A1 décrit la corrélation de rôles dans un réseau.

Un ou plusieurs nœuds du réseau de communication sont susceptibles de présenter des anomalies par rapport aux autres nœuds. Par « anomalie », il est entendu que le nœud est susceptible de mettre en œuvre des connexions avec des autres nœuds présentant un écart stochastique par rapport aux connexions mises en œuvre par les autres nœuds.

Pour détecter des anomalies, et notamment pour détecter des nœuds présentant une anomalie, dits nœuds anormaux, il est connu de mettre en œuvre des procédés de détection comprenant l'analyse des connexions des nœuds par modélisation statique, c'est-à-dire notamment sans prise en compte de caractéristiques dynamiques des connexions.

Dans un tel cas, par exemple le nombre de l'ensemble des connexions est enregistré pendant une période prédéfinie, pour chaque nœud.

Pour identifier les nœuds anormaux, par exemple un écart statistique du nombre de connexions enregistrées d'un nœud est identifié. L'écart statistique est notamment défini par rapport aux connexions des autres nœuds.

Cependant, de tels procédés de détection connus ne sont pas entièrement satisfaisants, car la détection des nœuds anormaux n'est pas toujours fiable. En particulier, dans certains cas, les nœuds anormaux ne sont pas détectés.

Ainsi, un but de l'invention est d'obtenir un procédé de détection permettant d'augmenter la fiabilité de détection de nœuds anormaux.

A cet effet, l'invention a pour objet un procédé de détection selon la revendication 1.

Le procédé de détection permet ainsi d'augmenter la fiabilité de détection d'au moins un groupe de nœuds anormaux.

En particulier, la détermination de l'ensemble de groupes de nœuds permet de repartir les nœuds en groupes de nœuds qui sont caractérisés à la fois par les nœuds qui sont dans le groupe respectif, et également par la durée de groupe. Ainsi, les groupes de nœuds permettent de prendre en compte des caractéristiques dynamiques des connexions entre les nœuds d'un groupe.

Notamment, lorsque le paramètre évolue au cours de la période d'observation, cela est détecté par le procédé de détection.

Contrairement aux procédés de détection connus, le procédé de détection selon la présente invention permet ainsi d'augmenter la fiabilité de détection en déterminant, pour chaque groupe de nœuds, le paramètre, qui est ensuite utilisé par le modèle de calcul.

Suivant d'autres aspects avantageux de l'invention, le procédé de détection est selon l'une quelconque des revendications 2 à 5.

L'invention a également pour objet un produit programme d'ordinateur selon la revendication 6.

L'invention a également pour objet un ensemble selon la revendication 7.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un ensemble comprenant un réseau de communication et un système de détection configuré pour mettre en œuvre le procédé de détection selon l'invention ;
[Fig 2] la figure 2 est une représentation schématique montrant des connexions variables dans le temps entre des nœuds du réseau de communication, les connexions étant détectées par le système de détection de la figure 1 ;
[Fig 3] la figure 3 est une représentation schématique comprenant une pluralité de graphes représentant des groupes de nœuds définis en fonction des connexions montrées sur la figure 2, et
[Fig 4] la figure 4 est une représentation schématique montrant des degrés de connexions des nœuds en fonction du temps.

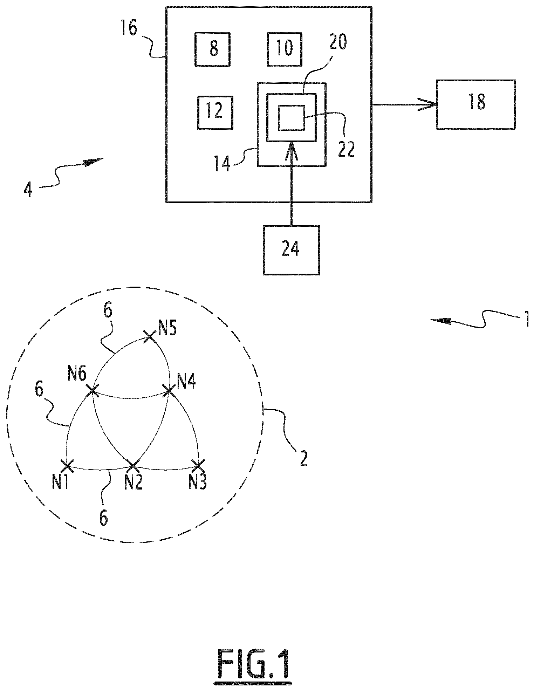

Sur la figure 1, un ensemble 1 comprend un réseau de communication 2 et un système de contrôle 4.

Le réseau de communication 2 comprend une pluralité de nœuds N, dénommés N1, N2, N3, N4, N5 et N6 sur les exemples des figures. Les nœuds N sont reliés entre eux par des liens de communication 6.

Par « lien de communication », il est entendu la possibilité d'établir une connexion C entre deux nœuds N.

Uniquement certains liens de communication 6 sont représentés sur la figure 1 pour des raisons de visibilité.

Notamment, chaque nœud N présente un lien de communication 6 avec chaque autre nœud N du réseau de communication 2.

En variante, certains nœuds N présentent des liens de communication 6 uniquement avec une partie des nœuds N de la pluralité de nœuds.

Chaque nœud N est configuré pour établir au moins une connexion C avec au moins un autre nœud N du réseau de communication 2 par le lien de communication 6 respectif.

Par « connexion », il est entendu un échange et/ou une transmission de données entre deux nœuds N.

Le réseau de communication 2 est par exemple configuré pour mettre en œuvre le protocole internet ou IP (de l'anglais « internet protocol »). Dans ce cas, chaque nœud N présente notamment une adresse IP.

Le réseau de communication 2 est par exemple un réseau d'entreprise ou un réseau d'un organisme public.

Le système de détection 4 comprend un module de réception 8, un premier module de détermination 10, un deuxième module de détermination 12 et un module d'obtention 14.

Le module de réception 8 est configuré pour recevoir des données relatives à chaque connexion C entre la pluralité de nœuds N pendant une période d'observation.

Le premier module de détermination 10 est configuré pour déterminer un ensemble de groupes de nœuds G. Chaque groupe de nœuds G est caractérisé par une durée de groupe et par les nœuds N, choisis parmi la pluralité de nœuds N, présentant au moins une connexion C avec chaque autre nœud N du même groupe de nœuds G pendant la durée de groupe.

Le deuxième module de détermination 12 est configuré pour déterminer, pour chaque groupe de nœuds G, au moins un paramètre caractérisant l'ensemble des connexions C mises en œuvre au sein du groupe de nœuds G.

Le module d'obtention 14 est configuré pour obtenir le groupe de nœuds anormaux à partir du paramètre en utilisant un modèle de calcul 20 obtenu par apprentissage automatique.

Le module de réception 8, le premier module de détermination 10, le deuxième module de détermination 12 et le module d'obtention 14 sont chacun par exemple intégrés dans au moins un calculateur 16.

Dans ce cas, chacun des modules parmi le module de réception 8, le premier module de détermination 10, le deuxième module de détermination 12 et le module d'obtention 14 se présente au moins partiellement sous la forme d'un logiciel exécutable par un processeur et stocké dans une mémoire du calculateur 16.

En variante ou en complément, chacun des modules parmi le module de réception 8, le premier module de détermination 10, le deuxième module de détermination 12 et le module d'obtention 14 est intégré, au moins partiellement, dans un dispositif physique, tel que par exemple un circuit logique programmable, tel qu'un FPGA (de l'anglais « Field Programmable Gate Array »), ou encore sous la forme d'un circuit intégré dédié, tel qu'un ASIC (de l'anglais « Application Specific Integrated Circuit »).

En complément, le système de détection 4 comprend en outre un module d'affichage 18.

Un procédé de détection va maintenant être décrit, ce procédé étant mis en œuvre par le système de détection 4.

Le procédé de détection comprend une étape de réception, une première étape de détermination, une deuxième étape de détermination et une étape d'obtention.

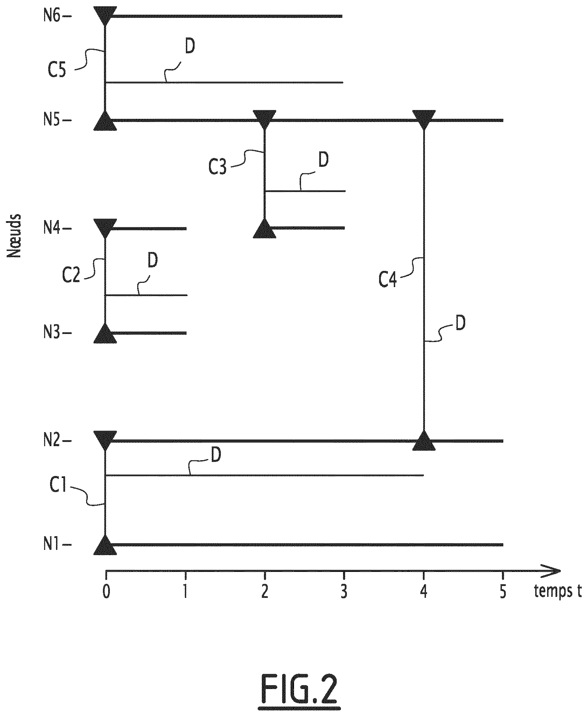

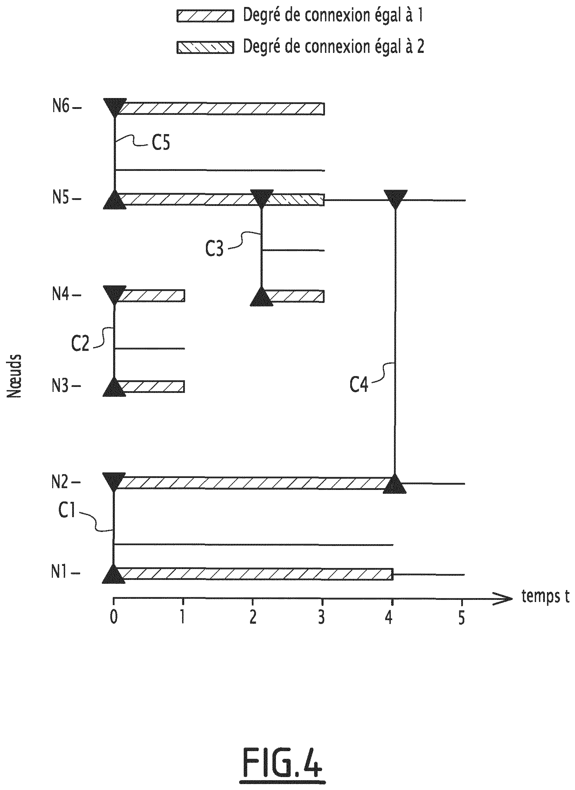

Lors de l'étape de réception, le module de réception 8 reçoit des données relatives à chaque connexion entre la pluralité de nœuds pendant une période d'observation. Dans les exemples des figures 2 à 4, la période d'observation est de 5 unités de temps t, par exemple 5 secondes.

Les données comprennent des identifiants des nœuds N reliés par la connexion. Chaque identifiant est par exemple une adresse IP selon le protocole internet.

Les données comprennent en outre une durée de la connexion. Chaque connexion C est ainsi caractérisée par les identifiants des nœuds N reliés par ladite connexion C et par la durée de la connexion.

Le figure 2 est une représentation schématique montrant les connexions variables sur le temps entre les nœuds N, dénommées nœuds N1 à N6.

Chaque nœud N est présent dans le réseau de communication 2 pendant une ou des périodes de présence.

Lorsqu'un nœud N est présent, il met en œuvre au moins une connexion C avec un autre nœud N. Par exemple, le nœud N1 est présent dans la période s'étendant de t=0 à t=5, de même que le nœud N2. Le nœud N3 est présent dans la période s'étendant de t=0 à t=1. Le nœud N4 est présent dans la période s'étendant de t=0 à t=1 et dans la période s'étendant de t= 2 à t=3. Le nœud N5 est présent dans la période s'étendant de t=1 à t=5. Le nœud N6 est présent dans la période s'étendant de t=0 à t=3.

Chaque nœud N met en œuvre des connexions C pendant sa présence avec au moins un autre nœud N. Chaque connexion C présente une durée de connexion D.

En référence à la figure 2, les connexions C sont dénommées C1, C2, C3, C4 et C5 dans cet exemple.

Le nœud N1 met par exemple en œuvre une connexion C1 avec le nœud N2 pendant une durée D s'étendant de t=0 à t=4. Le nœud N3 met par exemple en œuvre une connexion C2 avec le nœud N4 pendant une durée D s'étendant de t=0 à t=1. Le nœud N4 met par exemple en œuvre une connexion C3 avec le nœud N5 pendant une durée D s'étendant de t=2 à t=3. Le nœud N2 met par exemple en œuvre une connexion C4 avec le nœud N5 pendant une durée D convergeant vers 0. Par exemple, la connexion C4 transmet un unique paquet de données entre le nœud N2 et le nœud N5. Le nœud N5 met par exemple en œuvre une connexion C5 avec le nœud N6 pendant une durée D s'étendant de t=0 à t=3.

Chaque connexion C est notamment une connexion bidirectionnelle. Par exemple, des données sont échangées entre les deux nœuds N reliés par la connexion. En variante, au moins une connexion est une connexion unidirectionnelle.

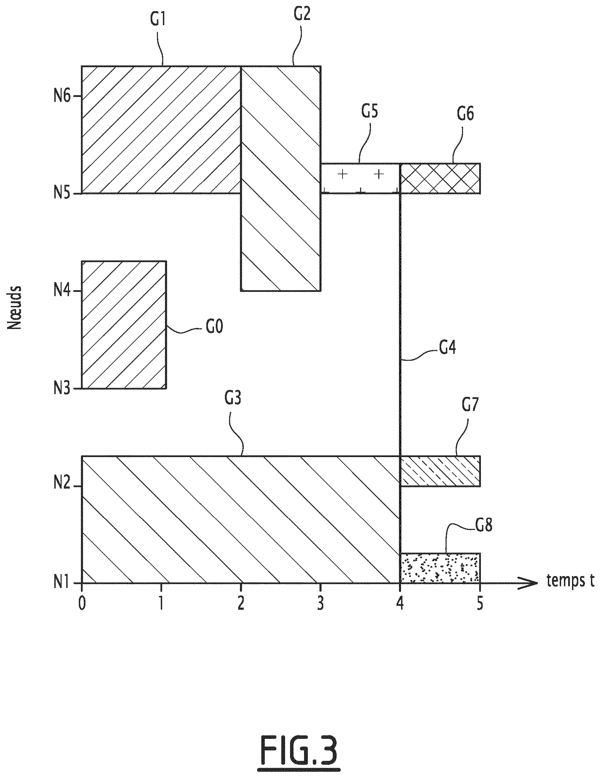

Lors de la première étape de détermination, le premier module de détermination 10 détermine un ensemble de groupes de nœuds G, par exemple visible sur la figure 3.

Chaque groupe de nœuds G est caractérisé par une durée de groupe et par les nœuds N, choisis parmi la pluralité de nœuds N qui font partie du groupe de nœuds G.

Chaque nœud du groupe de nœuds G présente au moins une connexion avec chaque autre nœud N du même groupe de nœuds G pendant la durée de groupe.

Les nœuds N du même groupe de nœuds G sont également appelés nœuds fortement connexes.

Les nœuds N ne faisant pas partie d'un groupe de nœuds G respectif pendant la durée de groupe sont également appelés nœuds faiblement connexes par rapport aux nœuds N de ce groupe de nœuds G.

En particulier, les nœuds faiblement connexes ne mettent pas en œuvre une connexion avec les nœuds N du groupe de nœuds pendant la durée de groupe.

Notamment, les nœuds N du même groupe de nœuds présentent une connexion C aux autres nœuds N du groupe pendant toute la durée de groupe.

Par exemple, chaque nœud N d'un groupe de nœuds G respectif met en œuvre une connexion C avec chaque autre nœud de ce groupe de nœuds G, notamment directement ou par l'intermédiaire d'au moins un autre nœud N de ce groupe de nœuds G.

Par exemple, au moins une connexion C entre deux nœuds N d'un groupe de nœuds G est une connexion indirecte. La connexion indirecte est établie par l'intermédiaire d'au moins un troisième nœud N du groupe de nœuds G auquel appartiennent notamment lesdits deux nœuds N.

La durée de groupe est en particulier la période pendant laquelle chaque nœud N du groupe de nœuds G présente une connexion avec chaque autre nœud N du groupe de nœuds G.

En particulier, la durée de groupe définit la période de temps de l'existence d'un groupe de nœuds G. L'ensemble des nœuds de ce groupe sont connectés entre eux pendant cette période.

Selon un exemple, au moins certains nœuds sont susceptibles de continuer d'exister en groupes plus petits ou plus grands après cette période.

La connexion entre les nœuds du groupe de nœuds G est en particulier soit une connexion directe, soit une connexion indirecte pendant la durée de ce groupe.

Par « connexion directe », il est entendu qu'au moins un lien de communication 6 connecte par exemple deux nœuds directement, en l'absence d'un passage par un autre nœud.

Par « connexion indirecte », il est notamment entendu que deux nœuds N ne sont pas connectés par une connexion directe, mais ils sont connectés par des liens de communication 6 via au moins un nœud N intermédiaire.

De préférence, il existe une connexion entre deux nœuds N issus de la pluralité de nœuds pendant une durée donnée si et seulement s'il existe des liens de communications 6 permettant par sauts successifs de rejoindre un des nœuds considérés depuis l'autre.

Selon un exemple non représenté, pour un groupe de nœuds G comprenant des nœuds A, B, C, D, la connexion entre les nœuds A et C est assurée pendant la première moitié de la durée de groupe par les liens de communications A-B et B-C puis pendant la seconde moitié par les liens A-D et D-C (le lien de communication A-C s'étant interrompu).

De préférence, la structure de la connexion est susceptible de changer durant la durée de groupe entre les nœuds du groupe, mais ces nœuds du groupe sont connectés directement ou indirectement entre eux pendant toute la durée de groupe.

Dans l'exemple de la figure 3, des groupes de nœuds G, dénommés groupes de nœuds G0 à G8 dans cette figure, sont représentés.

Le groupe de nœuds G0 comprend les nœuds N3 et N4 pendant la durée de groupe s'étendant de t=0 à t=1. Comme visible sur la figure 2, les nœuds N3 et N4 sont directement connectés entre eux par la connexion C2 pendant la durée de groupe.

Le groupe de nœuds G2 comprend les nœuds N4, N5 et N6 pendant la durée de groupe s'étendant de t=2 à t=3.

Comme visible sur la figure 2, le nœud N4 est relié au nœud N5 par la connexion C3 pendant la durée de groupe, et le nœud N4 est relié au nœud N6 par l'intermédiaire du nœud N5, et par l'intermédiaire des connexions C3 et C5 pendant la durée de groupe du groupe de nœuds G2.

Ainsi, les nœuds N4, N5 et N6 du groupe de nœuds G2 sont, en particulier pendant toute la durée de groupe du groupe G2, connectés entre eux.

Le groupe de nœuds G3 comprend les nœuds N1 et N2 pendant la durée de groupe s'étendant de t=0 à t=4. Comme visible sur la figure 2, ces nœuds sont reliés entre eux par la connexion C1.

Le groupe de nœuds G4 comprend les nœuds N5 et N2 pendant la durée de groupe convergeant vers 0 à l'instant t=4.

Les groupes de nœuds G5, G6, G7 et G8 comprennent chacun un unique nœud N5, N5, N2 et N1 pendant leur durée de groupe respective.

Par exemple, au regard du groupe de nœuds G5, le nœud N5 est présent pendant la durée de groupe s'étendant de t=3 à t=4 et ne présente aucune connexion avec un autre nœud N pendant la durée de groupe du groupe G5. Aucun autre nœud N n'est ainsi présent dans le groupe de nœuds G5 de l'exemple.

Notamment, au moins un nœud N fait partie de deux groupes de nœuds G distincts, à des instants distincts de la période d'observation. Par exemple, le nœud N5 fait partie des groupes de nœuds G1, G2, G5 et G6 pendant des durées de groupe respectives.

Lors de la deuxième étape de détermination, le deuxième module de détermination 12 détermine, pour chaque groupe de nœuds G, au moins un paramètre caractérisant l'ensemble des connexions mises en œuvre au sein du groupe de nœuds.

Le paramètre est notamment un paramètre caractérisant le comportement d'un nœud N relatif aux connexions établies par ce nœud N pendant la durée de groupe.

Par exemple, le paramètre comprend le nombre de connexions C du groupe de nœuds G. Les groupes de nœuds G0, G1, G3 et G4 de l'exemple des figures comprennent chacun une connexion C, le groupe de nœuds G2 comprend deux connexions C et les autres groupes de nœuds de l'exemple comprennent aucune connexion C.

Par exemple, le paramètre comprend au moins un paramètre statistique de la durée des connexions C du groupe de nœuds G, tel qu'une moyenne, par exemple une moyenne arithmétique, ou une variance de la durée des connexions du groupe de nœuds G.

Par exemple, le paramètre comprend au moins un paramètre statistique d'un débit de données des connexions C du groupe de nœuds, tel qu'une moyenne, par exemple une moyenne arithmétique, ou une variance du débit de données des connexions C.

Par exemple, le paramètre comprend au moins un paramètre statistique d'une densité de connexion, tel qu'une moyenne, par exemple une moyenne arithmétique, ou une variance de la densité de connexion.

La densité de connexion d'un lien de communication 6 entre deux nœuds N du groupe de nœuds G est une probabilité de connexion par ce lien de communication 6 à un instant donné pendant la durée de groupe. La densité de connexion présente par exemple une valeur comprise entre 0 et 1.

Par exemple, le paramètre comprend au moins un paramètre statistique d'un degré de connexion associé à chaque nœud N du groupe de nœuds G, tel qu'une moyenne, par exemple une moyenne arithmétique, ou une variance des degrés de connexion.

Le degré de connexion correspond au nombre de nœuds N reliés, pendant la durée de groupe, par une connexion C au nœud N présentant ledit degré de connexion.

La figure 3 est une représentation schématique d'un exemple du degré de connexion pour chaque nœud N pendant la période d'observation.

Le nœud N5 présente un degré de connexion égal à 2 pendant la période s'étendant de t=2 à t=3. Le nœud N5 est notamment connecté à la fois au nœud N4 et au nœud N6 pendant cette période. Le nœud N5 présente ainsi pendant la durée de groupe du groupe G2 un degré de connexion égal à 2.

Selon l'exemple de la figure 3, les nœuds N1 à N4 et N6 présentent, pendant la période d'observation, un degré de connexion égal à 1, lorsqu'ils sont connectés à un autre nœud N.

Le nœud N5 présente également un degré de connexion égal à 1 pendant la durée de groupe du groupe de nœuds G1, à savoir de t=0 à t=2.

Par exemple, le paramètre comprend au moins un paramètre statistique relatif à un autre paramètre de la théorie des graphes, tel qu'un k-noyau, dénommé couramment en anglais « k-core », une k-clique, une proximité (ou « closeness » en anglais), une centralité intermédiaire, une centralité d'intermédiarité ou intermédiarité (ou « betweenness » en anglais).

Notamment, le paramètre est un paramètre normé sur le nombre de nœuds N du groupe de nœuds G.

Selon un exemple, le paramètre est un paramètre normé sur un nombre de connexions possibles entre les nœuds N du groupe de nœuds G.

Lors de l'étape d'obtention, le module d'obtention 14 obtient le groupe de nœuds anormaux à partir du paramètre en utilisant le modèle de calcul 20 obtenu par apprentissage automatique. Le modèle de calcul 20 compare le paramètre avec au moins un paramètre de référence.

Par exemple, le module d'obtention 14 calcule le paramètre de référence en fonction du paramètre de chaque groupe de nœuds G. Par exemple, le paramètre de référence est une moyenne des paramètres de chaque groupe de nœuds G, telle qu'une moyenne arithmétique, une moyenne harmonique, une moyenne géométrique ou une moyenne quadratique.

Le modèle de calcul 20 comprend par exemple un réseau de neurones artificiels 22, une variable d'entrée du réseau de neurones artificiels 22 étant le paramètre, et une variable de sortie du réseau de neurones artificiels 22 étant le groupe de nœuds anormaux.

Selon un exemple, le modèle de calcul 20 met en œuvre un algorithme de détection d'anomalies dénommé « Isolation Forest ».

Le procédé de détection comprend par exemple en outre une étape d'affichage, lors de laquelle une information relative au groupe de nœuds anormaux est affiché sur le module d'affichage 18.

Le procédé de détection comprend notamment une phase d'entraînement, mise en œuvre au préalable de la mise en œuvre de l'étape de réception, de la première étape de détermination, de la deuxième étape de détermination et de l'étape d'obtention.

Lors de la phase d'entraînement, le modèle de calcul 20 est entraîné par un dispositif d'apprentissage automatique 24. Par exemple, le dispositif d'apprentissage automatique 24 fournit au modèle de calcul 20 en entrée le paramètre, et apprend au modèle de calcul 20 la ou les groupes de nœuds anormaux lorsque les connexions C des groupes de nœuds G présentent le paramètre fourni en entrée.

## Revendications

1. Procédé de détection d'au moins un groupe de nœuds anormaux parmi une pluralité de nœuds (N1, ... N6) d'un réseau de communication (2), les nœuds (N1, ... N6) du réseau de communication (2) étant reliés entre eux par des liens de communication (6), chaque nœud (N1, ... N6) étant configuré pour établir au moins une connexion (C1, ... C6) avec au moins un autre nœud (N1, ... N6) du réseau de communication (2) par le lien de communication (6) respectif, ledit procédé de détection comprenant une étape de réception de données relatives à chaque connexion (C1, ... C6) entre la pluralité de nœuds (N1, ... N6) pendant une période d'observation, chaque connexion (C1, ... C6) étant **caractérisée par** des identifiants des nœuds (N1, ... N6) reliés par ladite connexion (C1, ... C6) et par une durée de ladite connexion (C1, ... C6) ;
**caractérisé en ce que** le procédé de détection comprend en outre les étapes suivantes :
- détermination d'un ensemble de groupes de nœuds (G1, ... G8), chaque groupe de nœuds (G1, ... G8) étant **caractérisé par** une durée de groupe pendant laquelle chaque nœud (N1, ... N6) du groupe de nœuds (G1, ... G8) présente une connexion avec chaque autre nœud (N1, ... N6) du groupe de nœuds (G1, ... G8) et par les nœuds (N1, ... N6), choisis parmi la pluralité de nœuds (N1, ... N6), présentant au moins une connexion (C1, ... C6) avec chaque autre nœud (N1, ... N6) du même groupe de nœuds (G1, ... G8) pendant toute la durée de groupe ;
- détermination, pour chaque groupe de nœuds (G1, ... G8), d'au moins un paramètre caractérisant l'ensemble des connexions (C1, ... C6) mises en œuvre au sein du groupe de nœuds (G1, ... G8),
- obtention dudit groupe de nœuds anormaux à partir dudit paramètre en utilisant un modèle de calcul (20) obtenu par apprentissage automatique, le modèle de calcul (20) comparant le paramètre avec au moins un paramètre de référence,
le paramètre étant choisi dans la liste constituée par :
- le nombre de connexions (C1, ... C6) du groupe de nœuds (G1, ... G8) ;
- un paramètre statistique de la durée des connexions (C1, ... C6) du groupe de nœuds (G1, ... G8) ;
- un paramètre statistique d'un débit de données des connexions (C1, ... C6) du groupe de nœuds (G1, ... G8) ;
- un paramètre statistique d'une densité de connexion, la densité de connexion d'un lien de communication (6) entre deux nœuds (N1, ... N6) du groupe de nœuds (G1, ... G8) étant une probabilité de connexion par ce lien de communication (6) à un instant donné pendant la durée de groupe ; et
- un paramètre statistique d'un degré de connexion associé à chaque nœud (N1, ... N6) du groupe de nœuds (G1, ... G8), le degré de connexion correspondant au nombre de nœuds (N1, ... N6) reliés, pendant la durée de groupe, par une connexion (C1, ... C6) au nœud (N1, ... N6) présentant ledit degré de connexion.

2. Procédé de détection selon la revendication précédente, dans lequel au moins un nœud (N1, ... N6) fait partie de deux groupes de nœuds (G1, ... G8) distincts, à des instants distincts de la période d'observation.

3. Procédé de détection selon l'une quelconque des revendications précédentes, dans lequel le modèle de calcul (20) comprend un réseau de neurones artificiels (22), une variable d'entrée du réseau de neurones artificiels (22) étant le paramètre, et une variable de sortie du réseau de neurones artificiels (22) étant le groupe de nœuds anormaux.

4. Procédé de détection selon l'une quelconque des revendications précédentes, dans lequel le paramètre de référence est déterminé en fonction du paramètre de chaque groupe de nœuds (G1, ... G8).

5. Procédé de détection selon l'une quelconque des revendications précédentes, dans lequel au moins une connexion (C1, ... C6) entre deux nœuds (N1, ... N6) d'un groupe de nœuds (G1, ... G8) est une connexion indirecte, la connexion indirecte étant établie par l'intermédiaire d'au moins un troisième nœud (N1, ... N6) du groupe de nœuds (G1, ... G8).

6. Produit programme d'ordinateur comportant des instructions logicielles qui, lorsqu'elles sont exécutées par un ordinateur, mettent en œuvre un procédé de détection selon l'une quelconque des revendications précédentes.

7. Ensemble (1) comprenant un réseau de communication (2), comprenant une pluralité de nœuds (N1, ... N6), les nœuds (N1, ... N6) du réseau de communication (2) étant reliés entre eux par des liens de communication (6), chaque nœud (N1, ... N6) étant configuré pour établir au moins une connexion (C1, ... C6) avec au moins un autre nœud (N1, ... N6) du réseau de communication (2) par le lien de communication (6) respectif, et un système de détection d'au moins un groupe de nœuds anormaux parmi la pluralité de nœuds (N1, ... N6) du réseau de communication (2), le système de détection (4) comprenant :
- un module de réception (8) configuré pour recevoir des données relatives à chaque connexion (C1, ... C6) entre la pluralité de nœuds (N1, ... N6) pendant une période d'observation, chaque connexion (C1, ... C6) étant **caractérisée par** des identifiants des nœuds (N1, ... N6) reliés par ladite connexion (C1, ... C6) et par une durée de ladite connexion (C1, ... C6) ;
**caractérisé en ce que** le système de détection (4) comprend en outre :
- un premier module de détermination (10) configuré pour déterminer un ensemble de groupes de nœuds (G1, ... G8), chaque groupe de nœuds (G1, ... G8) étant **caractérisé par** une durée de groupe pendant laquelle chaque nœud (N1, ... N6) du groupe de nœuds (G1, ... G8) présente une connexion avec chaque autre nœud (N1, ... N6) du groupe de nœuds (G1, ... G8), et par les nœuds (N1, ... N6), choisis parmi la pluralité de nœuds (N1, ... N6), présentant au moins une connexion (C1, ... C6) avec chaque autre nœud (N1, ... N6) du même groupe de nœuds (G1, ... G8) pendant toute la durée de groupe ;
- un deuxième module de détermination (12) configuré pour déterminer, pour chaque groupe de nœuds (G1, ... G8), au moins un paramètre caractérisant l'ensemble des connexions (C1, ... C6) mises en œuvre au sein du groupe de nœuds (G1, ... G8), et
- un module d'obtention (14) configuré pour obtenir ledit groupe de nœuds anormaux à partir dudit paramètre en utilisant un modèle de calcul (20) obtenu par apprentissage automatique, le modèle de calcul (20) étant configuré pour comparer le paramètre avec au moins un paramètre de référence,
le paramètre étant choisi dans la liste constituée par :
- le nombre de connexions (C1, ... C6) du groupe de nœuds (G1, ... G8) ;
- un paramètre statistique de la durée des connexions (C1, ... C6) du groupe de nœuds (G1, ... G8) ;
- un paramètre statistique d'un débit de données des connexions (C1, ... C6) du groupe de nœuds (G1, ... G8) ;
- un paramètre statistique d'une densité de connexion, la densité de connexion d'un lien de communication (6) entre deux nœuds (N1, ... N6) du groupe de nœuds (G1, ... G8) étant une probabilité de connexion par ce lien de communication (6) à un instant donné pendant la durée de groupe ; et
- un paramètre statistique d'un degré de connexion associé à chaque nœud (N1, ... N6) du groupe de nœuds (G1, ... G8), le degré de connexion correspondant au nombre de nœuds (N1, ... N6) reliés, pendant la durée de groupe, par une connexion (C1, ... C6) au nœud (N1, ... N6) présentant ledit degré de connexion.

## Patentansprüche

1. Erkennungsverfahren mindestens einer Gruppe anormaler Knoten aus einer Vielzahl von Knoten (N1, ... N6) eines Kommunikationsnetzes (2), wobei die Knoten (N1, ... N6) des Kommunikationsnetzes (2) durch Kommunikationsverbindungen (6) miteinander verbunden sind, jeder Knoten (N1, ... N6) konfiguriert ist, um über die jeweilige Kommunikationsverbindung (6) mindestens eine Verbindung (C1, ... C6) mit mindestens einem anderen Knoten (N1, ... N6) des Kommunikationsnetzes (2) herzustellen, das Erkennungsverfahren umfassend einen Schritt eines Empfangens von Daten in Bezug auf jede Verbindung (C1, ... C6) zwischen der Vielzahl von Knoten (N1, ... N6) während einer Beobachtungsperiode, wobei jede Verbindung (C1, ... C6) durch Kennungen der Knoten (N1, ... N6), die durch die Verbindung (C1, ... C6) verbunden sind, und durch eine Dauer der Verbindung (C1, ... C6) **gekennzeichnet ist;**
**dadurch** gekennzeichnet, dass das Erkennungsverfahren ferner die folgenden Schritte umfasst:
- Bestimmen einer Anordnung von Gruppe von Knoten (G1, ... G8), jede Gruppe von Knoten (G1, ... G8) durch eine Gruppendauer, während der jeder Knoten (N1, ... N6) der Gruppe von Knoten (G1, ... G8) eine Verbindung mit jedem anderen Knoten (N1, ... N6) der Gruppe von Knoten (G1, ... G8) aufweist, und durch die Knoten (N1, ... N6), die ausgewählt sind aus der Vielzahl von Knoten (N1, ... N6), die mindestens eine Verbindung (C1, ... C6) mit jedem anderen Knoten (N1, ... N6) derselben Gruppe von Knoten (G1, ... G8) während der gesamten Gruppenzeit aufweisen, gekennzeichnet ist;
- Bestimmen, für jede Gruppe von Knoten (G1, ... G8), mindestens eines Parameters, der alle Verbindungen (C1, ... C6) charakterisiert, die innerhalb der Gruppe von Knoten (G1, ... G8) implementiert sind,
- Erlangen der Gruppe anormaler Knoten anhand des Parameters unter Verwendung eines Berechnungsmodells (20), das durch maschinelles Lernen erlangt wird, wobei das Berechnungsmodell (20) den Parameter mit mindestens einem Referenzparameter vergleicht,
der Parameter ausgewählt ist aus der Liste, die aus Folgendem besteht:
- der Anzahl der Verbindungen (C1, ... C6) der Gruppe von Knoten (G1, ... G8);
- einem statistischen Parameter der Dauer der Verbindungen (C1, ... C6) der Gruppe von Knoten (G1, ... G8);
- einem statistischen Parameter einer Datenrate der Verbindungen (C1, ... C6) der Gruppe von Knoten (G1, ... G8);
- einem statistischen Parameter einer Verbindungsdichte, wobei die Verbindungsdichte einer Kommunikationsverbindung (6) zwischen zwei Knoten (N1, ... N6) der Gruppe von Knoten (G1, ... G8) eine Wahrscheinlichkeit für eine Verbindung über diese Kommunikationsverbindung (6) zu einem bestimmten Zeitpunkt während der Gruppendauer ist; und
- einem statistischen Parameter eines Verbindungsgrads, der mit jedem Knoten (N1, ... N6) der Gruppe von Knoten (G1, ... G8) assoziiert ist, wobei der Verbindungsgrad der Anzahl von Knoten (N1, ... N6) entspricht, die während der Gruppendauer durch eine Verbindung (C1, ... C6) mit dem Knoten (N1, ... N6) verbunden sind, der den Verbindungsgrad aufweist.

2. Erkennungsverfahren nach dem vorherigen Anspruch,
wobei mindestens ein Knoten (N1, ... N6) Teil von zwei verschiedenen Gruppen von Knoten (G1, ... G8) zu verschiedenen Zeitpunkten der Beobachtungsperiode ist.

3. Erkennungsverfahren nach einem der vorherigen Ansprüche, wobei das Berechnungsmodell (20) ein künstliches neuronales Netz (22) umfasst, eine Eingangsvariable des künstlichen neuronalen Netzes (22) der Parameter ist, und eine Ausgabevariable des künstlichen neuronalen Netzes (22) die Gruppe anormaler Knoten ist.

4. Erkennungsverfahren nach einem der vorherigen Ansprüche, wobei der Referenzparameter abhängig von dem Parameter jeder Gruppe von Knoten (G1, ... G8) bestimmt wird.

5. Erkennungsverfahren nach einem der vorherigen Ansprüche, wobei mindestens eine Verbindung (C1, ... C6) zwischen zwei Knoten (N1, ... N6) einer Gruppe von Knoten (G1, ... G8) eine indirekte Verbindung ist, wobei die indirekte Verbindung über mindestens einen dritten Knoten (N1, ... N6) der Gruppe von Knoten (G1, ... G8) hergestellt wird.

6. Rechnerprogrammprodukt, umfassend Softwareanweisungen, die, wenn sie von einem Rechner ausgeführt werden, ein Erkennungsverfahren nach einem der vorherigen Ansprüche implementieren.

7. Anordnung (1), umfassend ein Kommunikationsnetz (2), umfassend eine Vielzahl von Knoten (N1, ... N6), wobei die Knoten (N1, ... N6) des Kommunikationsnetzes (2) durch Kommunikationsverbindungen (6) miteinander verbunden sind, jeder Knoten (N1, ... N6) konfiguriert ist, um über die jeweilige Kommunikationsverbindung (6) mindestens eine Verbindung (C1, ... C6) mit mindestens einem anderen Knoten (N1, ... N6) des Kommunikationsnetzes (2) herzustellen, und ein Erkennungsverfahren mindestens einer Gruppe anormaler Knoten aus der Vielzahl von Knoten (N1, ... N6) des Kommunikationsnetzes (2), das Erkennungssystem (4) umfassend:
- ein Empfangsmodul (8), das konfiguriert ist, um Daten in Bezug auf jede Verbindung (C1, ... C6) zwischen der Vielzahl von Knoten (N1, ... N6) während einer Beobachtungsperiode zu empfangen, wobei jede Verbindung (C1, ... C6) durch Kennungen der Knoten (N1, ... N6), die durch die Verbindung (C1, ... C6) verbunden sind, und durch eine Dauer der Verbindung (C1, ... C6) **gekennzeichnet ist;**
**dadurch** gekennzeichnet, dass das Erkennungssystem (4) ferner Folgendes umfasst:
- ein erstes Bestimmungsmodul (10), das konfiguriert ist, um eine Anordnung von Gruppe von Knoten (G1,... G8) zu bestimmen, wobei jede Gruppe von Knoten (G1, ... G8) durch eine Gruppendauer, während der jeder Knoten (N1, ... N6) der Gruppe von Knoten (G1, ... G8) eine Verbindung mit jedem anderen Knoten (N1, ... N6) der Gruppe von Knoten (G1, ... G8) aufweist, und durch die Knoten (N1, ... N6), die ausgewählt sind aus der Vielzahl von Knoten (N1, ... N6), die mindestens eine Verbindung (C1, ... C6) mit jedem anderen Knoten (N1, ... N6) derselben Gruppe von Knoten (G1, ... G8) während der gesamten Gruppenzeit aufweisen, gekennzeichnet ist;
- ein zweites Bestimmungsmodul (12), das konfiguriert ist, um für jede Gruppe von Knoten (G1, ... G8) mindestens einen Parameter zu bestimmen, der alle Verbindungen (C1, ... C6) charakterisiert, die innerhalb der Gruppe von Knoten (G1, ... G8) implementiert sind, und
- ein Erlangungsmodul (14), das konfiguriert ist, um die Gruppe anormaler Knoten anhand des Parameters unter Verwendung eines Berechnungsmodells (20), das durch maschinelles Lernen erlangt wird, zu erlangen, wobei das Berechnungsmodell (20) konfiguriert ist, um den Parameter mit mindestens einem Referenzparameter zu vergleichen,
der Parameter ausgewählt ist aus der Liste, die aus Folgendem besteht:
- der Anzahl der Verbindungen (C1, ... C6) der Gruppe von Knoten (G1, ... G8);
- einem statistischen Parameter der Dauer der Verbindungen (C1, ... C6) der Gruppe von Knoten (G1, ... G8);
- einem statistischen Parameter einer Datenrate der Verbindungen (C1, ... C6) der Gruppe von Knoten (G1, ... G8);
- einem statistischen Parameter einer Verbindungsdichte, wobei die Verbindungsdichte einer Kommunikationsverbindung (6) zwischen zwei Knoten (N1, ... N6) der Gruppe von Knoten (G1, ... G8) eine Wahrscheinlichkeit für eine Verbindung über diese Kommunikationsverbindung (6) zu einem bestimmten Zeitpunkt während der Gruppendauer ist; und
- einem statistischen Parameter eines Verbindungsgrads, der mit jedem Knoten (N1, ... N6) der Gruppe von Knoten (G1, ... G8) assoziiert ist, wobei der Verbindungsgrad der Anzahl von Knoten (N1, ... N6) entspricht, die während der Gruppendauer durch eine Verbindung (C1, ... C6) mit dem Knoten (N1, ... N6) verbunden sind, der den Verbindungsgrad aufweist.

## Claims

1. A method for detecting at least one group of abnormal nodes among a plurality of nodes (N1, ... N6) of a communication network (2), the nodes (N1, ... N6) of the communication network (2) being linked together by communication links (6), each node (N1, ... N6) being configured to establish at least one connection (C1, ... C6) with at least one other node (N1, ... N6) of the communication network (2) via the respective communication link (6), said detection method comprising a step of receiving data relating to each connection (C1, ... C6) between the plurality of nodes (N1, ... N6) during an observation period, each connection (C1, ... C6) being **characterised by** identifiers of the nodes (N1, ... N6) linked by said connection (C1, ... C6) and by a duration of said connection (C1, ... C6);
**characterised in that** the detection method further comprises the following steps:
- determining a set of node groups (G1, ... G8), each node group (G1, ... G8) being **characterised by** a group duration during which each node (N1, ... N6) of the node group (G1, ... G8) has a connection to every other node (N1, ... N6) of the node group (G1, ... G8) and by the nodes (N1, ... N6), chosen from the plurality of nodes (N1, ... N6), with at least one connection (C1, ... C6) with every other node (N1, ... N6) of the same node group (G1, ... G8) for the entire duration of the group;
- determining, for each node group (G1, ... G8), at least one parameter characterising all the connections (C1, ... C6) implemented within the node group (G1, ... G8),
- obtaining said group of abnormal nodes from said parameter using a calculation model (20) obtained by machine learning, the calculation model (20) comparing the parameter with at least one reference parameter, the parameter being chosen from the list consisting of:
- the number of connections (C1, ... C6) of the node group (G1, ... G8);
- a statistical parameter for the duration of the connections (C1, ... C6) of the node group (G1, ... G8);
- a statistical parameter of a data rate of the connections (C1, ... C6) of the node group (G1, ... G8);
- a statistical parameter of a connection density, the connection density of a communication link (6) between two nodes (N1, ... N6) of the node group (G1, ... G8) being a probability of connection via that communication link (6) at a given time during the group period; and
- a statistical parameter of a degree of connection associated with each node (N1, ... N6) of the node group (G1, ... G8), the degree of connection corresponding to the number of nodes (N1, ... N6) linked, for the duration of the group, by a connection (C1, ... C6) at node (N1, ... N6) with said degree of connection.

2. The detection method according to the preceding claim,
in which at least one node (N1, ... N6) is part of two groups of nodes (G1, ... G8) at different times during the observation period.

3. The detection method according to any one of the preceding claims, wherein the calculation model (20) comprises an artificial neural network (22), an input variable of the artificial neural network (22) being the parameter, and an output variable of the artificial neural network (22) being the group of abnormal nodes.

4. The detection method according to any one of the preceding claims, in which the reference parameter is determined as a function of the parameter of each node group (G1, ... G8).

5. A detection method according to any of the preceding claims, in which at least one connection (C1, ... C6) between two nodes (N1, ... N6) of a node group (G1, ... G8) is an indirect connection, the indirect connection being established via at least one third node (N1, ... N6) of the node group (G1, ... G8).

6. A computer program product comprising software instructions which, when executed by a computer, implement a detection method according to any one of the preceding claims.

7. An assembly (1) comprising a communication network (2), comprising a plurality of nodes (N1, ... N6), the nodes (N1, ... N6) of the communication network (2) being linked together by communication links (6), each node (N1, ... N6) being configured to establish at least one connection (C1, ... C6) with at least one other node (N1, ... N6) of the communication network (2) via the respective communication link (6), and a system for detecting at least one group of abnormal nodes among the plurality of nodes (N1, ... N6) of the communication network (2), the detection system (4) comprising:
- a reception module (8) configured to receive data relating to each connection (C1, ...). C6) between the plurality of nodes (N1, ... N6) during an observation period, each connection (C1, ... C6) being **characterised by** identifiers of the nodes (N1, ... N6) linked by said connection (C1, ... C6) and by a duration of said connection (C1, ... C6);
**characterised in that** the detection system (4) further comprises:
- a first determination module (10) configured to determine a set of node groups (G1,... G8), each node group (G1, ... G8) being **characterised by** a group duration during which each node (N1, ... N6) of the node group (G1, ... G8) has a connection to every other node (N1, ... N6) of the node group (G1, ... G8) and by the nodes (N1, ... N6), chosen from the plurality of nodes (N1,... N6), with at least one connection (C1,... C6) with every other node (N1, ... N6) of the same node group (G1, ... G8) for the entire duration of the group;
- a second determination module (12) configured to determine, for each node group (G1, ... G8), at least one parameter characterising all the connections (C1, ... C6) implemented within the node group (G1, ... G8), and
- an obtaining module (14) configured to obtain said group of abnormal nodes from said parameter using a calculation model (20) obtained by machine learning, the calculation model (20) being configured to compare the parameter with at least one reference parameter,
the parameter being chosen from the list consisting of:
- the number of connections (C1, ... C6) of the node group (G1, ... G8);
- a statistical parameter for the duration of the connections (C1, ... C6) of the node group (G1, ... G8);
- a statistical parameter of a data rate of the connections (C1, ... C6) of the node group (G1, ... G8);
- a statistical parameter of a connection density, the connection density of a communication link (6) between two nodes (N1, ... N6) of the node group (G1, ... G8) being a probability of connection via that communication link (6) at a given time during the group period; and
- a statistical parameter of a degree of connection associated with each node (N1, ... N6) of the node group (G1, ... G8), the degree of connection corresponding to the number of nodes (N1, ... N6) linked, for the duration of the group, by a connection (C1, ... C6) at node (N1, ... N6) with said degree of connection.
